(19) Europäisches Patentamt
European Patent Office
Office européen des brevets

(11) **EP 4 738 690 A1**

(12) **EUROPÄISCHE PATENTANMELDUNG**

(43) Veröffentlichungstag:
06.05.2026 Patentblatt 2026/19

(21) Anmeldenummer: 24209566.9

(22) Anmeldetag: 29.10.2024

(51) Internationale Patentklassifikation (IPC):
$H02P\ 9/14^{(2006.01)}$   $B60K\ 16/00^{(2020.01)}$
$B60L\ 15/20^{(2006.01)}$   $H02K\ 7/00^{(2006.01)}$
$H02P\ 9/48^{(2006.01)}$   $H02P\ 23/00^{(2016.01)}$

(52) Gemeinsame Patentklassifikation (CPC):
H02P 9/14; B60K 16/00; B60L 15/20;
B60L 15/2045; H02P 9/48; H02P 23/009;
B60L 2240/423

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Schmitz Cargobull AG
48341 Altenberge (DE)**

(72) Erfinder: **Bartelt, Gerd
77767 Appenweier (DE)**

(74) Vertreter: **Cohausz & Florack
Patent- & Rechtsanwälte
Partnerschaftsgesellschaft mbB
Bleichstraße 14
40211 Düsseldorf (DE)**

(54) **STEUERN EINES ACHSGENERATORS EINES NUTZFAHRZEUGS**

(57) Es wird unter anderem offenbart ein Verfahren zum Steuern eines Achsgenerators eines Nutzfahrzeugs, wobei das Verfahren durch eine oder mehrere Vorrichtungen ausgeführt wird, wobei das Verfahren umfasst:
- Steuern des Achsgenerators oder Bewirken des Steuerns des Achsgenerators, um das Drehmoment des Achsgenerators auf ein Soll-Drehmoment einzustellen, wobei das Soll-Drehmoment, wenn der Achsgenerator im Feldschwächebetrieb betrieben wird, kleiner als das für die aktuelle Drehzahl des Achsgenerators maximale Drehmoment des Achsgenerators ist.

Fig.3

EP 4 738 690 A1

## Beschreibung

### Gebiet

Beispielhafte Ausführungsformen der Erfindung betreffen das Steuern eines Achsgenerators eines Nutzfahrzeugs, insbesondere eines Lastkraftwagens oder Anhängers, oder das Bewirken des Steuern eines Achsgenerators eines Nutzfahrzeugs, insbesondere eines Lastkraftwagens oder Anhängers.

### Hintergrund

Moderne Nutzfahrzeuge weisen häufig eine Vielzahl an elektrischen Komponenten auf, die im Betrieb mit elektrischer Energie zu versorgen sind. So kann beispielsweise eine Transportkältemaschine elektrisch betrieben sein oder eine mit elektrischer Energie zu versorgende Telematikeinheit zur Kommunikation mit einer von dem Nutzfahrzeug entfernten Vorrichtung wie einem Server vorgesehen sein. Dabei besteht der Bedarf, elektrische Komponenten des Nutzfahrzeugs - unabhängig von dem die Antriebsleistung zum Bewegen des Nutzfahrzeugs bereitstellenden Fahrzeugmotor - mit elektrischer Energie zu versorgen. Dies kann durch sogenannte Generatorachsen erfolgen, bei denen ein nicht angetriebenes Rad über das Radmontageelement mit einer Antriebswelle verbunden ist. Das nicht angetriebene Rad überträgt so während der Fahrt eine Drehbewegung auf die Antriebswelle, die ihrerseits einen Generator (im Folgenden auch als Achsgenerator bezeichnet) antreibt. Um die Drehzahl der Antriebswelle in eine geeignete Drehzahl zum Betrieb des Achsgenerators umsetzen zu können, kann zwischen der Antriebswelle und dem Achsgenerator ein Getriebe vorgesehen sein. Zum Schutz der Antriebswelle ist diese überwiegend in einem Hohlraum eines Achskörpers aufgenommen. Der Einfachheit halber bietet es sich dabei an, wenn das Getriebe und der Achsgenerator fest mit der Achse und an derselben verbaut sind, wie dies beispielsweise in der EP 4 206 018 A1 beschrieben ist.

Generatorachsen der genannten Art sind aufgrund ihres komplexeren Aufbaus weniger robust als gewöhnliche Nutzfahrzeugachsen, die nicht zum Antrieb eines Achsgenerators während der Fahrt vorgesehen sind. Es kommt daher öfter zu einer Beschädigung der Generatorachsen.

### Zusammenfassung einiger beispielhafter Ausführungsformen der Erfindung

Eine Aufgabe der vorliegenden Erfindung ist es daher, eine Lösung bereitzustellen, die hilft Beschädigungen der Generatorachsen zu vermeiden.

Diese Aufgabe wird gelöst durch den Gegenstand der unabhängigen Ansprüche.

Gemäß der Erfindung wird ein Verfahren zum Steuern eines Achsgenerators eines Nutzfahrzeugs offenbart, wobei das Verfahren durch eine oder mehrere Vorrichtungen ausgeführt wird, wobei das Verfahren umfasst:

- Steuern des Achsgenerators oder Bewirken des Steuerns des Achsgenerators, um das Drehmoment des Achsgenerators auf ein Soll-Drehmoment einzustellen, wobei das Soll-Drehmoment, wenn der Achsgenerator im Feldschwächebereich betrieben wird, kleiner als das für die aktuelle Drehzahl des Achsgenerators maximale Drehmoment des Achsgenerators ist

Das offenbarte Verfahren wird durch eine oder mehrere Vorrichtungen ausgeführt. Dass das offenbarte Verfahren durch eine Vorrichtung ausgeführt wird, soll derart verstanden werden, dass die Vorrichtung das Verfahren allein ausführt; d.h. die Vorrichtung oder Mittel der Vorrichtung führen alle Schritte des Verfahrens aus. Und dass das offenbarte Verfahren durch mehrere Vorrichtungen ausgeführt wird, soll derart verstanden werden, dass die Vorrichtungen das Verfahren gemeinsam ausführen; d.h. die Vorrichtungen oder Mittel der Vorrichtungen kooperieren (z.B. zusammenwirken), um das Verfahren auszuführen. Zum Beispiel kann eine Vorrichtung einen oder mehrere Schritte des Verfahrens ausführen, und eine andere Vorrichtung kann einen oder mehrere andere Schritte des Verfahrens ausführen. Alternativ oder zusätzlich kann auch vorgesehen sein, dass zwei Vorrichtungen kooperieren (z.B. zusammenwirken), um einen oder mehrere Schritte des Verfahrens gemeinsam auszuführen. Die mehreren Vorrichtungen können Teil eines Systems sein.

Dementsprechend wird gemäß der Erfindung ferner eine Vorrichtung offenbart, wobei die Vorrichtung Mittel eingerichtet zur Ausführung des offenbarten Verfahrens umfasst. Dabei sind die Mittel der Vorrichtung eingerichtet, das Verfahren alleine und/oder in Kooperation (z.B. Zusammenwirkung) mit einer oder mehreren weiteren Vorrichtungen auszuführen. Zum Beispiel ist die Vorrichtung Teil eines Systems.

Die Mittel können Hardware- und/oder Software-Komponenten umfassen. Die Mittel können beispielsweise mindestens einen Speicher mit Programmanweisungen eines Computerprogramms (z.B. des unten offenbarten Computerprogramms) und mindestens einen Prozessor ausgebildet zum Ausführen von Programmanweisungen aus dem mindestens einen Speicher umfassen. Dementsprechend soll auch eine Vorrichtung als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, die Vorrichtung zu veranlassen, das offenbarte Verfahren alleine oder in Kooperation mit einem oder mehreren weiteren Vorrichtungen auszuführen. Es versteht sich, dass die offenbarte Vorrichtung auch andere nicht aufgeführte Mittel umfassen kann.

Die Vorrichtung ist beispielweise eine Steuervorrichtung für das Nutzahrzeug, insbesondere eine Telematikeinheit und/oder eine Steuereinheit für das Nutzfahrzeug.

Ferner wird ein Nutzfahrzeug offenbart, wobei das Nutzfahrzeug umfasst:

- zumindest die offenbarte Vorrichtung; und
- eine als Generatorachse ausgebildete Nutzfahrzeugachse umfassend einen Achsgenerator.

Ferner wird ein Computerprogramm offenbart, wobei das Computerprogramm Programmanweisungen umfasst, die dazu ausgebildet sind, bei Ausführung durch mindestens einen Prozessor eine Vorrichtung (z.B. den oben offenbarten Server) zu veranlassen, das offenbarte Verfahren alleine oder in Kooperation (z.B. Zusammenwirkung) mit einem oder mehreren weiteren Vorrichtungen auszuführen.

Das offenbarte Computerprogramm ist beispielsweise auf einem computerlesbaren Speichermedium enthalten und/oder gespeichert. Unter einem computerlesbaren Speichermedium soll beispielsweise ein physisches und/oder berührbares Speichermedium verstanden werden.

Das offenbarte Verfahren, die offenbarte Vorrichtung, das offenbarte Nutzfahrzeug und das offenbarte Computerprogramm dienen beispielsweise zum Steuern eines/des Achsgenerators eines/des Nutzfahrzeugs.

Im Folgenden werden die Eigenschaften des offenbarten Verfahrens (im Folgenden auch als "Verfahren" bezeichnet), der offenbarten Vorrichtung (im Folgenden auch als "Vorrichtung" bezeichnet), des offenbarten Nutzfahrzeugs (im Folgenden auch als "Nutzfahrzeug" bezeichnet) sowie des offenbarten Computerprogramms (im Folgenden auch als "Computerprogramm" bezeichnet) - teilweise beispielhaft - beschrieben. Es versteht sich, dass das Verfahren, die Vorrichtung, das Nutzfahrzeug und das Computerprogramm zueinander korrespondieren, so dass die Offenbarung eines Merkmals für eine dieser Kategorien als Offenbarung eines korrespondierenden Merkmals für die anderen Kategorien verstanden werden soll.

Nutzfahrzeuge sind in unterschiedlichen Ausgestaltungen bekannt, etwa in Form von Lastkraftwagen oder Anhängern. Dabei sind die Nutzfahrzeuge unabhängig von ihrer Ausgestaltung insbesondere für den Transport von Gütern, also der zu transportierenden Ladung, überwiegend im öffentlichen Straßenverkehr vorgesehen. Zu diesem Zweck weisen die bekannten Nutzfahrzeuge meist unterschiedliche Arten von Aufbauten auf, die einen Laderaum umgrenzen, welcher der Aufnahme der zu transportierenden Ladung dient.

So sind beispielsweise sogenannte Planenaufbauten bekannt, bei denen die Seitenwände und das Dach durch wenigstens eine Plane verschlossen sind.

Die Stirnwand ist bei Planenaufbauten meist als feste Wand ausgebildet, während die Rückwand regelmäßig durch zwei Flügeltüren gebildet wird, um den Laderaum bedarfsweise von hinten beladen zu können. Wenn die wenigstens eine Plane entlang der Seitenwand verschoben werden kann, spricht man auch von sogenannten Curtainsidern. Neben Planenaufbauten sind sogenannte Kofferaufbauten bekannt. Wie bei Planenaufbauten ist bei Kofferaufbauten die Stirnwand meist als feste Wand ausgebildet und die Rückwand regelmäßig durch zwei Flügeltüren gebildet. Im Gegensatz zu Planenaufbauten sind bei Kofferaufbauten allerdings die Seitenwände und das Dach durch feste Wände verschlossen. Die Seitenwände, das Dach und die Stirnwand sowie bedarfsweise der Boden von Kofferaufbauten sind meist durch Paneele gebildet, die äußere strukturgebende Decklagen und dazwischen eine Kernlage aus geschäumtem Kunststoff umfassen.

Unabhängig von der Art des Aufbaus weisen Nutzfahrzeuge ein Chassis und zumindest eine daran befestigte Nutzfahrzeugachse auf, die mit Rädern zum Bewegen des Nutzfahrzeugs verbunden ist. Zur Befestigung der Räder an der Nutzfahrzeugachse weist die Nutzfahrzeugachse für gewöhnlich an ihren gegenüberliegenden Längsenden jeweils ein Radmontageelement auf, bei dem es sich um einen sogenannten Radkopf handeln kann. Die Radmontageelemente sind typischerweise drehbar an der Nutzfahrzeugachse gehalten, sodass ein Abrollen der an den Radmontageelementen befestigten Räder möglich ist. Diese Räder sind grundsätzlich selbst nicht angetrieben.

Die zumindest eine Nutzfahrzeugachse ist als Generatorachse ausgebildet ist. Dabei umfasst eine solche Generatorachse einen Achsgenerator. Zum Beispiel ist der Achsgenerator, wie oben offenbart, durch eine während der Fahrt von einem nicht angetriebenen Rad der Generatorachse übertragene Drehbewegung antreibbar. Zum Beispiel überträgt das nicht angetriebene Rad während der Fahrt eine Drehbewegung auf eine Antriebswelle, die ihrerseits den Achsgenerator antreibt. Um die Drehzahl der Antriebswelle in eine geeignete Drehzahl zum Betrieb des Achsgenerators umsetzen zu können, kann zwischen der Antriebswelle und dem Achsgenerator ein Getriebe vorgesehen sein.

Der Achsgenerator ist beispielsweise eingerichtet, die in Form der von dem nicht angetriebenen Rad der Generatorachse übertragenen Drehbewegung erhaltene mechanische Leistung in elektrische Leistung umzuwandeln und die elektrische Leistung in Form einer Wechselspannung bereitzustellen. Die Spannung (z.B. Amplitude oder Effektivwert) und/oder die Frequenz der von dem Achsgenerator bereitgestellten Wechselspannung sind beispielsweise von der Drehzahl des Achsgenerators abhängig.

Bei dem Achsgenerator handelt es sich um eine rotierende elektrische Maschine mit einem Rotor und einem Stator. Zum Beispiel wird die mechanisch Leistung in Form der Drehbewegung des nicht angetriebenen Rad der Generatorachse auf den Rotor des Achsgenerators übertragen und durch elektromagnetische Induktion in elektrische Leistung, die durch den Stator beispielsweise in Form der Wechselspannung bereitgestellt wird, umgewandelt. Unter der Drehzahl des Achsgenerators kann dementsprechend zum Beispiel die Drehzahl des Rotors verstanden werden; und unter dem Drehmoment des Achsgenerators kann dementsprechend zum Beispiel das Drehmoment des Rotors verstanden werden.

Zum Beispiel kann es sich bei dem Achsgenerator beispielsweise um eine Synchronmaschine, insbesondere eine Drehstrom-Synchronmaschine, oder eine Asynchronmaschine, insbesondere eine Drehstrom-Asynchronmaschine, handeln.

Die von einem solchen Achsgenerator bereitgestellte Wechselspannung (z.B. eine Zwei- oder Dreiphasenwechselspannung) kann durch einen Spannungsrichter in eine Betriebsspannung (z.B. zum Betrieb von elektrischen Komponenten des Nutzfahrzeugs) umgewandelt werden. Beispiele für einen solchen Spannungsrichter sind (i) ein Gleichrichter, (ii) ein Umrichter oder (iii) eine Kombination von Gleichrichter und Umrichter oder (iv) eine Kombination von Gleichrichter und Wechselrichter. Der Spannungsrichter kann bidirektional sein, z.B. ein bidirektionaler Gleichrichter oder ein bidirektionaler Wechselrichter. Ein solcher bidirektionaler Gleichrichter oder Wechselrichter kann in zwei Richtungen betrieben werden. In einer Richtung arbeitet er als Gleichrichter und in der anderen Richtung arbeitet er als Wechselrichter. Bei dem Spannungsrichter handelt es sich vorzugsweise um einen aktiven und/oder gesteuerten Spannungsrichter, der zumindest ein aktives und/oder steuerbares (z.B. schaltbares) Bauteil wie einen Transistor (z.B. einen MOSFET oder einen IGBT) und/oder einen Thyristor aufweist.

Zum Beispiel kann ein Gleichrichter die von dem Achsgenerator bereitgestellte Wechselspannung in eine Betriebsgleichspannung umwandeln. Es versteht sich, dass zwischen Achsgenerator und Gleichrichter zusätzlich auch ein Umrichter angeordnet sein kann, der die von dem Achsgenerator bereitgestellte Wechselspannung in eine Zwischenwechselspannung umwandelt, so dass der Gleichrichter Zwischenspannung in die Betriebsgleichspannung umwandelt. Die Betriebsgleichspannung kann beispielsweise zum Betrieb von elektrischen Komponenten des Nutzfahrzeugs wie Steuereinheiten, Sensoren, Lampen, usw. des Nutzfahrzeugs und/oder zum Laden einer Batterie des Nutzfahrzeugs bereitgestellt werden. Zum Beispiel kann die Betriebsgleichspannung der Nennspannung (z.B. 12 V, 24 V, 48 V oder 650V) eines Bordspannungsnetzes des Nutzfahrzeugs und/oder einer Batterie des Nutzfahrzeugs entsprechen und/oder im Nennspannungsband (z.B. 12 V-Spannungsband: 9,6 V - 14,4 V, 24 V-Spannungsband: 19,2 V - 28,8 V, 48 V-Spannungsband: 38,4 - 57,6 V oder 650V-Spannungsband: 450V - 800V) eines Bordspannungsnetzes und/oder einer Batterie des Nutzfahrzeugs liegen. Es versteht sich, dass die von einem solchen Achsgenerator bereitgestellte Wechselspannung alternativ oder zusätzlich in eine Betriebswechselspannung (z.B. eine zwei- oder dreiphasige Betriebswechselspannung) umgewandelt und zum Betrieb von elektrischen Komponenten des Nutzfahrzeugs bereitgestellt werden kann. Ein Beispiel für eine solche elektrische Komponente ist ein Elektromotor einer Transportkältemaschine des Nutzfahrzeugs. Zum Beispiel kann ein Umrichter die von dem Achsgenerator bereitgestellten Wechselspannung in die Betriebswechselspannung umwandeln; oder ein Wechselrichter kann die durch den oben offenbarten Gleichrichter bereitgestellte Betriebsgleichspannung in die Betriebswechselspannung umwandeln.

Unter dem Steuern des Achsgenerators, um das Drehmoment des Achsgenerators auf ein Soll-Drehmoment einzustellen, soll beispielsweise verstanden werden, dass das Drehmoment des Achsgenerators auf das Soll-Drehmoment geregelt wird und/oder dass eine Drehmomentregelung des Achsgenerators angesteuert wird, um das Drehmoment des Achsgenerators auf das Soll-Drehmoment zu regeln. Eine solche Drehmomentregelung kann beispielsweise durch einen Spannungsrichter, der die von dem Achsgenerator bereitgestellte Wechselspannung in eine Betriebsspannung und/oder eine Zwischenspannung umwandelt, realisiert werden. Zum Beispiel kann der Spannungsumrichter das Soll-Drehmoment durch eine Regelung der Ströme in den Statoren des Achsgenerators oder durch eine Anpassung (z.B. Begrenzung) der elektrischen Leistung regeln. Es versteht sich, dass die Erfindung nicht auf eine Regelung durch einen Spannungsumrichter beschränkt ist. Alternativ oder zusätzlich könnte das Soll-Drehmoment des Achsgenerators beispielsweise auch durch das Zu- und Abschalten von elektrischen Lasten (z.B. elektrischen Widerständen), was ebenfalls zu einer Anpassung der elektrischen Leistung führt, und/oder durch mechanische Maßnahmen wie Bremsen geregelt werden.

Unter dem Bewirken des Steuerns des Achsgenerators, um das Drehmoment des Achsgenerators auf ein Soll-Drehmoment einzustellen, soll beispielsweise verstanden werden, dass das Steuern des Achsgenerators veranlasst wird, zum Beispiel in dem das Soll-Drehmoment für das Steuerns des Achsgenerator bestimmt wird.

Der Achsgenerator kann im Konstantflussbereich (auch als Grundrehzahlbereich bezeichnet) und im Feldschwächebereich betrieben werden. Der Konstantflussbereich und der Feldschwächebereich beschreiben unterschiedliche Betriebsbereiche des Achsgenerators.

Der Achsgenerators soll beispielsweise als im Konstantflussbereich betrieben verstanden werden, wenn die Drehzahl des Achsgenerators kleiner oder gleich der sogenannten Nenndrehzahl des Achsgenerators ist. Alternativ soll der Achsgenerator beispielsweise als im Konstantflussbereich betrieben verstanden werden, wenn die Drehzahl des Achsgenerators größer oder gleich einer Minimaldrehzahl des Achsgenerators und kleiner oder gleich der sogenannten Nenndrehzahl des Achsgenerators ist. Die Minimaldrehzahl kann vorgegeben sein und beschreibt beispielsweise die Drehzahl des Achsgenerators, bei der der Achsgenerator aktiviert wird.

Der Achsgenerator soll beispielsweise als im Feldschwächebereich betrieben verstanden werden, wenn die Drehzahl des Achsgenerators größer als die sogenannte Nenndrehzahl des Achsgenerators ist. Alternativ soll der Achsgenerator beispielsweise als im Feldschwächebereich betrieben verstanden werden, wenn die Drehzahl des Achsgenerators größer als die sogenannte Nenndrehzahl des Achsgenerators und kleiner oder gleich einer Maximaldrehzahl des Achsgenerators ist. Die Maximaldrehzahl kann vorgegeben sein und beschreibt beispielsweise die Drehzahl des Achsgenerators, bei der der Achsgenerator deaktiviert wird.

Im Konstantflussbereich ist das maximale Drehmoment des Achsgenerators zum Beispiel konstant, und die Spannung (z.B. Amplitude oder Effektivwert) der von dem Achsgenerator bereitgestellten Wechselspannung kann mit steigender Drehzahl zunehmen und bei der Nenndrehzahl das Spannungsmaximum erreichen. Im Feldschwächebereich nimmt das maximale Drehmoment des Achsgenerators mit steigender Drehzahl ab, weil die Spannung der von dem Achsgenerator bereitgestellten Wechselspannung nicht über das Spannungsmaximum ansteigen kann. Die Nenndrehzahl des Achsgenerators kann somit der Drehzahl des Achsgenerators entsprechen, bei der der Achsgenerator sein maximales Drehmoment hat und die vom von dem Achsgenerator bereitgestellten Wechselspannung das Spannungsmaximum erreicht.

Die Erfindung beruht unter anderem auf der Erkenntnis, dass es sich bei der Generatorachse um ein schwingendes System mit geringer Dämpfung handelt und dass die Dämpfung dieses Systems durch den Achsgenerator beeinflusst werden kann, wenn sich das Drehmoment des Achsgenerators abhängig von der Drehzahl des Achsgenerators verändert. Eine solche Abhängigkeit zwischen Drehmoment und Drehzahl besteht, wenn der Achsgenerator im Feldschwächebereich betrieben wird. Denn im Feldschwächebereich kann das maximale Drehmoment des Achsgenerators mit steigender Drehzahl des Achsgenerators abnehmen. Das bedeutet, dass, wenn das Nutzfahrzeug beschleunigt wird, so dass die Drehzahl des Achsgenerators steigt, das Drehmoment des Achsgenerators abnehmen kann. Durch eine solche Abnahme des Drehmoments des Achsgenerators verringert sich der bremsende Effekt des Achsgenerators, was zu einer weiteren Beschleunigung führen kann, so dass sich die Drehzahl des Achsgenerators noch weiter erhöht. Es kann also zu einer Mitkopplung kommen, die in einem Aufschwingen der ohnehin nur gering gedämpften Generatorachse und schlimmstenfalls in einer Beschädigung oder Zerstörung der Generatorachse resultiert.

Um ein solches Aufschwingen und die daraus möglicherweise resultierenden Beschädigungen der Generatorachse zu vermeiden, soll das Soll-Drehmoment gemäß Erfindung, wenn der Achsgenerator im Feldschwächebereich betrieben wird, kleiner als das für die aktuelle Drehzahl des Achsgenerators maximale Drehmoment des Achsgenerators ist. Dadurch, dass das Soll-Drehmoment kleiner als das für die aktuelle Drehzahl maximale Drehmoment ist, wird erreicht, dass das Drehmoment des Achsgenerators sich nicht zwangsläufig verringert, wenn sich die Drehzahl des Achsgenerators erhöht.

Wenn sich die aktuelle Drehzahl des Nutzfahrzeugs aufgrund einer Beschleunigung oder Verzögerung verändert, kann das Soll-Drehmoment beispielsweise zunächst konstant gehalten werden, z.B. für einen vorgegebenen Zeitraum und/oder bis die Beschleunigung oder Verzögerung abgeschlossen ist. Erst danach kann das Soll-Drehmoment beispielsweise an die veränderte aktuelle Drehzahl angepasst werden.

Weitere Vorteile der offenbarten Erfindung werden nachfolgend anhand beispielhafter Ausführungsformen des offenbarten Verfahrens, der offenbarten Vorrichtung, des offenbarten Nutzfahrzeugs und des offenbarten Computerprogramms beschrieben.

In beispielhaften Ausführungsformen ist der Achsgenerator eine durch ein Rad des Nutzfahrzeugs antreibbare rotierende elektrische Maschine wie eine Asynchronmaschine, insbesondere eine Drehstrom-Asynchronmaschine.

Wie oben offenbart, kann der Achsgenerator Teil einer als Generatorachse ausgebildeten Nutzfahrzeugachse des Nutzfahrzeugs sein. Die Generatorachse weist zwei nicht angetriebene Räder auf. Zum Beispiel ist der Achsgenerator durch eine während der Fahrt von einem Rad (z.B. einem einzigen Rad der Räder) der Generatorachse übertragene Drehbewegung antreibbar. Zum Beispiel überträgt das nicht angetriebene Rad während der Fahrt eine Drehbewegung auf eine Antriebswelle, die ihrerseits den Achsgenerator (z.B. den Rotor des Achsgenerators) antreibt. Um die Drehzahl der Antriebswelle in eine geeignete Drehzahl zum Betrieb des Achsgenerators umsetzen zu können, kann zwischen der Antriebswelle und dem Achsgenerator ein Getriebe vorgesehen sein.

In beispielhaften Ausführungsformen umfasst das Steuern des Achsgenerators oder das Bewirken des Steuerns des Achsgenerators:

- Bestimmen, dass der Achsgenerator im Feldschwächebetrieb betrieben wird.

Zum Beispiel kann das Bestimmen, dass der Achsgenerator im Feldschwächebereich betrieben wird, zumindest teilweise auf einer aktuellen Fahrtgeschwindigkeit des Nutzfahrzeugs und/oder einer aktuellen Drehzahl des Achsgenerator basieren. Dass das Bestimmen, dass der Achsgenerator im Feldschwächebereich betrieben wird, zumindest teilweise auf der aktuellen Fahrtgeschwindigkeit des Nutzfahrzeugs und/oder der aktuellen Drehzahl des Achsgenerator basiert, soll beispielsweise derart verstanden werden, dass die aktuelle Fahrtgeschwindigkeit des Nutzfahrzeugs und/oder die aktuelle Drehzahl des Achsgenerator beim Bestimmen berücksichtigt wird. Es versteht sich, dass noch weitere Informationen beim Bestimmen berücksichtigt werden können.

Die aktuelle Fahrtgeschwindigkeit des Nutzfahrzeugs kann beispielsweise durch eine Fahrtgeschwindigkeitsinformation repräsentiert werden. Zum Beispiel kann die Fahrtgeschwindigkeitsinformation eine durch einen Nutzfahrzeugsensor erfasste aktuelle Fahrgeschwindigkeit repräsentieren oder auf einer durch einen Nutzfahrzeugsensor erfassten aktuellen Eigenschaft basieren. Zum Beispiel umfasst das Verfahren das Erhalten der Fahrtgeschwindigkeitsinformation. Zum Beispiel wird die Fahrtgeschwindigkeitsinformation von dem Nutzfahrzeugsensor (z.B. einem Fahrtgeschwindigkeitssensor) empfangen. Alternativ kann die Fahrtgeschwindigkeitsinformation als Ergebnis des Bestimmens der aktuellen Fahrtgeschwindigkeit basierend auf einer durch den Nutzfahrzeugsensor erfassten aktuellen Eigenschaft wie einer aktuellen Raddrehzahl eines Rads des Nutzfahrzeugs erhalten werden.

Gleichermaßen kann die aktuelle Drehzahl des Achsgenerators durch eine Drehzahlinformation repräsentiert werden.

Zum Beispiel kann die Drehzahlinformation eine durch einen Nutzfahrzeugsensor (unmittelbar oder mittelbar) erfasste aktuelle Drehzahl des Achsgenerators repräsentieren oder auf einer durch einen Nutzfahrzeugsensor erfassten aktuellen Eigenschaft basieren. Ferner ist denkbar, dass die Drehzahlinformation als Ergebnis des Bestimmens der aktuellen Drehzahl erhalten wird. Das Bestimmen der aktuellen Drehzahl kann beispielsweise durch einen Spannungsrichter (z.B. einen Spannungsrichter, der die von dem Achsgenerator bereitgestellte Wechselspannung in eine Betriebsspannung umwandelt und/oder eine Drehmomentregelung des Achsgenerators realisiert) erfolgen. Zum Beispiel kann der Spannungsrichter die aktuelle Drehzahl zumindest teilweise basierend auf der von dem Achsgenerator bereitgestellten Wechselspannung bestimmen. Alternativ oder zusätzlich kann das Bestimmen der aktuellen Drehzahl zumindest teilweise basierend auf einer auf einer durch einen Nutzfahrzeugsensor erfassten aktuellen Eigenschaft erfolgen. Zum Beispiel umfasst das Verfahren das Erhalten der Drehzahlinformation. Zum Beispiel wird die Drehzahlinformation von dem Nutzfahrzeugsensor (z.B. einem Drehzahlsensor) und/oder dem Spannungsrichter empfangen.

Bei einer durch einen Nutzfahrzeugsensor erfassten Eigenschaften kann es sich beispielsweise um eine physikalische oder chemische Größe handeln. Dass eine Eigenschaft durch einen Nutzfahrzeugsensor erfasst wird, soll beispielsweise derart verstanden werden, dass der Nutzfahrzeugsensor die entsprechende physikalische Größe (wie Fahrtgeschwindigkeit oder Drehzahl) oder chemische Größe erfasst (z.B. misst) und eine entsprechende Sensorinformation, die die erfasste physikalische oder chemische Größe (z.B. quantitativ und/oder qualitativ) repräsentiert, bereitstellt. Das Bestimmen, dass der Achsgenerator im Feldschwächebereich betrieben wird, kann beispielsweise anhand von vorgegebenen Regeln erfolgen. Zum Beispiel können die Regeln vorgeben, dass (z.B. nur dann) bestimmt wird, dass der Achsgenerator im Feldschwächebereich betrieben wird, wenn die aktuelle Fahrtgeschwindigkeit des Nutzfahrzeugs (z.B. eine durch die Fahrtgeschwindigkeitsinformation repräsentierte Fahrgeschwindigkeit) größer und/oder gleich einer vorgebeben Schwellwertgeschwindigkeit und/oder die aktuellen Drehzahl des Achsgenerator (z.B. eine durch die Drehzahlinformation repräsentierte aktuelle Drehzahl) größer oder gleich einer vorgegebenen Schwellwertdrehzahl ist. Die Schwellwertdrehzahl kann beispielsweise so gewählt sein, dass sie der Nenndrehzahl des Achsgenerators entspricht. Die Schwellwertfahrtgeschwindigkeit kann beispielsweise so gewählt sein, dass davon ausgegangen wird, dass sich bei dieser Fahrtgeschwindigkeit die Nenndrehzahl des Achsgenerators einstellt.

In beispielhaften Ausführungsformen umfasst das Steuern des Achsgenerators oder das Bewirken des Steuerns des Achsgenerators:

- Erhalten einer eine Drehzahl des Achsgenerators repräsentierenden Drehzahlinformation;
- Bestimmen des Soll-Drehmoments zumindest teilweise basierend auf der Drehzahlinformation.

Wie oben offenbart, kann die Drehzahlinformation eine durch einen Nutzfahrzeugsensor (unmittelbar oder mittelbar) erfasste aktuelle Drehzahl des Achsgenerators repräsentieren oder auf einer durch einen Nutzfahrzeugsensor erfassten aktuellen Eigenschaft basieren. Zum Beispiel kann die Drehzahlinformation erhalten werden, indem sie von dem Nutzfahrzeugsensor (z.B. einem Drehzahlsensor) empfangen wird. Alternativ kann die Drehzahlinformation als Ergebnis des Bestimmens der Drehzahl basierend auf einer durch den Nutzfahrzeugsensor erfassten Eigenschaft erhalten werden.

Die Drehzahlinformation kann beispielsweise eine aktuelle Drehzahl des Achsgenerators, insbesondere eine durch einen Nutzfahrzeugsensor erfasste aktuelle Drehzahl des Achsgenerators, repräsentieren. Dies soll beispielsweise derart verstanden werden, dass die Drehzahlinformation (ohne zusätzliche Verzögerung) erhalten wird und/oder eine Drehzahl des Achsgenerators repräsentiert, die vor nicht mehr als 10 ms oder 50 ms oder 100 ms oder 200 ms aufgetreten ist (z.B. erfasst wurde). Zum Beispiel wird die Drehzahlinformation durch einen Nutzfahrzeugsensor unmittelbar (z.B. ohne zusätzliche Verzögerung und/oder so schnell wie technisch möglich) nach dem Erfassen der Drehzahl des Achsgenerators bereitgestellt, so dass die Drehzahlinformation ohne zusätzliche zeitliche Verzögerung erhalten wird.

Alternativ kann die Drehzahlinformation beispielsweise eine Drehzahl des Achsgenerators, insbesondere eine durch einen Nutzfahrzeugsensor erfasste Drehzahl des Achsgenerators, mit einer zeitlichen Verzögerung repräsentieren. Dies soll beispielsweise derart verstanden werden, dass die Drehzahlinformation mit einer zusätzlichen Verzögerung (z.B. durch ein PT1-Verzögerungsglied) erhalten wird und/oder eine Drehzahl des Achsgenerators repräsentiert, die vor mehr als 250 ms oder 500 ms oder 1000 ms aufgetreten ist (z.B. erfasst wurde). Zum Beispiel wird die Drehzahlinformation durch einen Nutzfahrzeugsensor nicht unmittelbar nach dem Erfassen der Drehzahl des Achsgenerators, sondern über ein Verzögerungsglied (wie ein PT1-Verzögerungsglied) bereitgestellt, so dass die Drehzahlinformation mit einer zeitlichen Verzögerung erhalten wird.

Dass das Bestimmen des Soll-Drehmoments zumindest teilweise auf der Drehzahlinformation basiert, soll beispielsweise derart verstanden werden, dass die durch die Drehzahlinformation repräsentierte Drehzahl beim Bestimmen berücksichtigt wird. Es versteht sich, dass noch weitere Informationen beim Bestimmen berücksichtigt werden können.

Das Bestimmen des Soll-Drehmoments kann beispielsweise anhand von vorgegebenen Regeln erfolgen. Zum Beispiel können die Regeln vorgeben, für welche durch die Drehzahlinformation repräsentierte Drehzahl welches Soll-Drehmoment bestimmt werden soll.

Zum Beispiel kann das Bestimmen des Soll-Drehmoments zumindest teilweise auf einer Drehzahl-Drehmoment-Kennlinie basieren. Die Drehzahl-Drehmoment-Kennlinie kann für jede Drehzahl des Achsgenerators in einem Drehzahlbereich (z.B. im Feldschwächebereich oder in einem Teil des Feldschwächebereichs) ein jeweiliges Soll-Drehmoment und/oder ein jeweils maximales Drehmoment vorgeben.

Wenn die Drehzahl-Drehmoment Kennlinie für jede Drehzahl des Achsgenerators in einem Drehzahlbereich ein jeweiliges Soll-Drehmoment vorgibt, wird das durch die Drehzahl-Drehmoment Kennlinie für die durch die Drehzahlinformation repräsentierte Drehzahl des Achsgenerators vorgegebene Soll-Drehmoment bestimmt.

Wenn die Drehzahl-Drehmoment Kennlinie dagegen für jede Drehzahl des Achsgenerators in einem Drehzahlbereich ein jeweiliges maximales Drehmoment vorgibt, wird ein Soll-Drehmoment bestimmt, das kleiner als das durch die Drehzahlinformation repräsentierte Drehzahl des Achsgenerators vorgegebene maximale Drehmoment ist. Zum Beispiel kann das Soll-Drehmoment bestimmt werden, indem von dem maximalen Drehmoment ein (z.B. vorgegebener) Offset (z.B. 7 Nm) abgezogen (z.B. subtrahiert) wird.

Zum Beispiel kann die Drehzahl-Drehmoment-Kennlinie vordefiniert sein (z.B. durch die Regeln vordefiniert) oder im Betrieb des Achsgenerators bestimmt und/oder angepasst werden.

Alternativ oder zusätzlich kann das Bestimmen des Soll-Drehmoments zumindest teilweise auf einem Algorithmus und/oder einer mathematischen Formel basieren. Der Algorithmus und/oder die mathematische Formal können durch die Regeln definiert sein und beispielsweise dazu dienen, das maximale Drehmoment des Achsgenerators in einem Drehzahlbereich (z.B. im Feldschwächebereich oder in einem Teil des Feldschwächebereichs) näherungsweise bestimmen zu können. Eine solche Näherung ist beispielsweise mit der folgenden Näherungsformel im Feldschwächebereich oder in einem Teil des Feldschwächebereichs möglich:

$$M_{max} = \frac{A}{n - n0} - B$$

Dabei ist *n* die Drehzahl des Achsgenerators und $M_{max}$ das maximale Drehmoment des Achsgenerators für diese Drehzahl; und *n0* bezeichnet die Nenndrehzahl. Die Faktoren *A* und *B* können für den jeweiligen Achsgenerator anhand von Messdaten bestimmt werden. Die Faktoren *A* und *B* können beispielsweise vordefiniert sein (z.B. durch die Regeln vordefiniert) oder im Betrieb des Achsgenerators bestimmt und/oder angepasst werden. Der Faktor *A* liegt typischerweise im Wertebereich 2000 sNm bis 4000 sNm; und der Faktor *B* liegt typischerweise im Wertebereich 10Nm bis 30Nm.

Um die Soll-Drehzahl zu bestimmen, kann von dem durch eine solche Näherungsformel für die durch die Drehzahlinformation repräsentierte Drehzahl des Achsgenerators erhaltene maximale Drehmoment beispielsweise ein (z.B. vorgegebener) Offset (z.B. 5Nm, 7 Nm oder 10Nm) abgezogen (z.B. subtrahiert) werden.

In beispielhaften Ausführungsformen wird die vom Achsgenerator erzeugte Wechselspannung durch einen Spannungsrichter in eine Gleichspannung (z.B. die oben offenbarte Betriebsgleichspannung) umgewandelt. Zum Beispiel ist der Spannungsrichter eingerichtet, den Achsgenerator zu regeln, um das Drehmoment des Achsgenerators auf das Soll-Drehmoment einzustellen. Wie oben offenbart, kann es sich bei dem Spannungsrichter vorzugsweise um einen aktiven und/oder gesteuerten Spannungsrichter handeln, der zumindest ein aktives und/oder steuerbares (z.B. schaltbares) Bauteil wie einen Transistor (z.B. einen MOSFET oder einen IGBT) und/oder einen Thyristor aufweist.

Weitere vorteilhafte beispielhafte Ausführungsformen der Erfindung sind der folgenden detaillierten Beschreibung einiger beispielhafter Ausführungsformen der vorliegenden Erfindung, insbesondere in Verbindung mit den Figuren zu entnehmen. Die Figuren sollen jedoch nur dem Zwecke der Verdeutlichung, nicht aber zur Bestimmung des Schutzbereiches der Erfindung dienen.

Die Figuren sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

**Detaillierte Beschreibung einiger beispielhafter Ausführungsformen**

Es zeigen:

Fig. 1a      ein Zugfahrzeuggespann mit einem Zugfahrzeug und einer beispielhaften Ausführungsform eines erfindungsgemäßen Nutzfahrzeugs;

Fig. 1b-c    eine beispielhafte Ausführungsform einer Generatorachse;

Fig. 2       ein Blockschaltbild einer beispielhaften Ausführungsform eines erfindungsgemäßen Nutzfahrzeugs;

Fig. 3       eine beispielhafte Drehzahl-Drehmoment-Kennlinie eines Achsgenerators;

Fig. 4       eine beispielhafte Ausführungsform einer erfindungsgemäßen Vorrichtung;

Fig. 5       ein Flussdiagramm einer beispielhaften Ausführungsform eines Verfahrens gemäß der Erfindung.

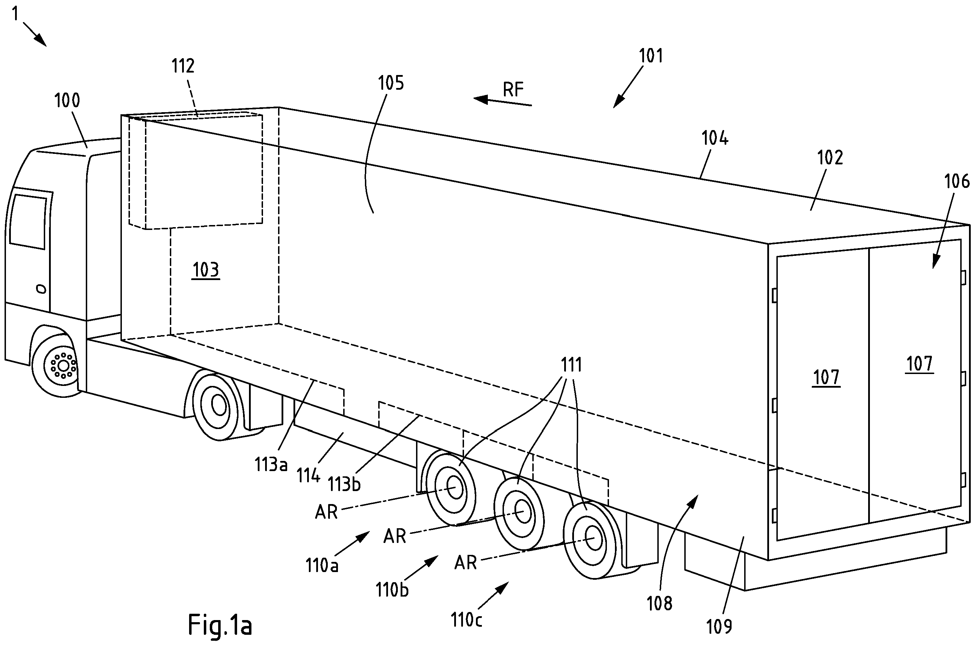

In Fig. 1a ist ein Zugfahrzeuggespann 1 mit einem Zugfahrzeug 100 und einer beispielhaften Ausführungsform eines erfindungsgemäßen Nutzfahrzeugs 101 in Form eines Sattelaufliegers in einer perspektivischen Ansicht dargestellt. Der Sattelauflieger 101 weist einen Kofferaufbau umfassend ein festes Dach 102, eine feste Stirnwand 103, zwei feste Seitenwände 104, 105 und eine feste Rückwand 106, die im Wesentlichen durch zwei Flügeltüren 107 gebildet ist. Zudem umfasst der Sattelauflieger 101 einen Laderaum 108, der nach unten durch einen Ladeboden 109 begrenzt wird. Neben dem Kofferaufbau weist der Sattelauflieger 101 vorliegend ein nicht näher dargestelltes Chassis und drei hintereinander angeordnete, von dem Chassis gehaltene Nutzfahrzeugachsen 110 auf. An den Nutzfahrzeugachsen 110 sind jeweils zwei Räder 111 auf den gegenüberliegenden Längsseiten des Sattelaufliegers um eine Raddrehachse AR drehbar befestigt.

An der Stirnwand 103 ist eine Transportkältemaschine 112 montiert, die Luft aus dem Laderaum 108 ansaugt, temperiert und wieder zurück in den Laderaum 108 bläst. Die Transportkältemaschine 112 ist über eine elektrische Verbindung 113a mit einem elektrischen Energiespeicher 114 in Form einer wiederaufladbaren Batterie verbunden.

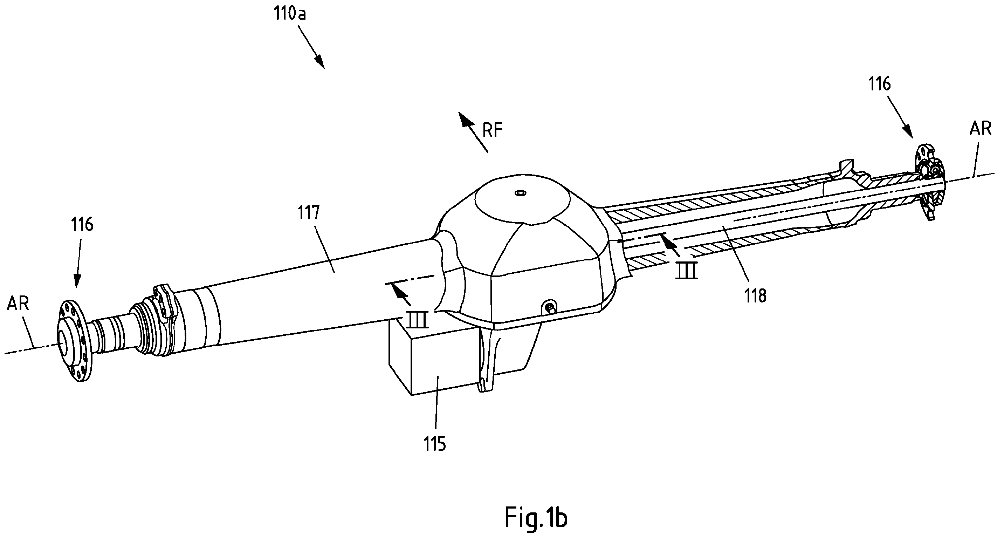

In Fig. 1b ist eine beispielhafte Ausführungsform der Nutzfahrzeugachse 110a dargestellt. Die Nutzfahrzeugachse 110a weist an ihren gegenüberliegenden Längsenden jeweils ein Radmontageelement 116 auf, an dem ein Rad 111 des Sattelaufliegers 101 beispielsweise über einen Radflansch befestigt sein kann. Dabei sind die Radmontageelemente 116 um die Raddrehachse AR drehbar gelagert. Zwischen den Radmontageelementen 116 erstreckt sich ein Achskörper 117 der Nutzfahrzeugachse 110, in dem weitere Komponenten der Nutzfahrzeugachse 110 aufgenommen sind. Zudem ist an dem Achskörper 117 ein Achsgenerator 115 der Nutzfahrzeugachse 110 befestigt. Bei der Nutzfahrzeugachse 110a handelt es sich somit um eine Generatorachse.

Der Achsgenerator 115 ist eingerichtet, die in Form der von dem in Fahrtrichtung RF rechts angeordneten Rad 111 der Generatorachse 110a übertragenen Drehbewegung erhaltene mechanische Leistung in elektrische Leistung umzuwandeln und die elektrische Leistung in Form einer Wechselspannung bereitzustellen. Die Wechselspannung kann beispielsweise über einen in der elektrischen Verbindung 113b angeordneten Gleichrichter (in Fig. 1a-c nicht dargestellt) in eine Betriebsgleichspannung zum Laden der Batterie 114 umgewandelt werden.

Das in Fahrtrichtung RF rechts angeordnete Radmontageelement 116, bei dem es sich um einen sogenannten Radkopf handeln kann, ist mit einer Antriebswelle 118 verbunden, die sich von dem Radmontageelement 116 zur Mitte der Generatorachse 110a erstreckt, und zwar längs zur Drehachse der Antriebswelle 118. Über die Antriebswelle 118 ist das Radmontageelement 116 mit dem Generator 115 verbunden, sodass die Drehbewegung des Radmontageelements 116 über die Antriebswelle 118 an den Generator 115 übertragen werden kann. Die Drehachse der Antriebswelle 118 ist dabei parallel zur Raddrehachse AR.

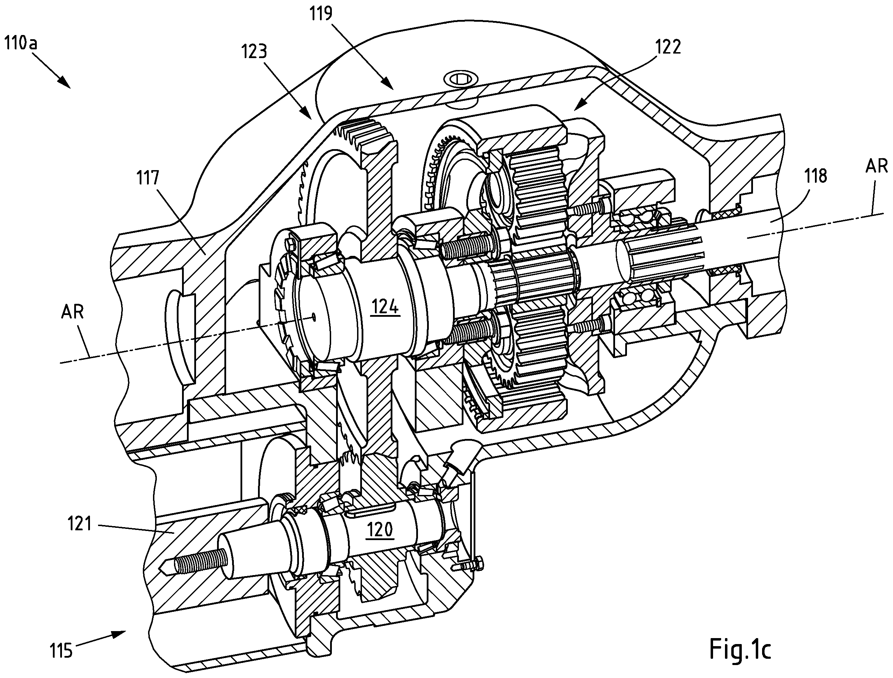

In der Fig. 1c ist lediglich exemplarisch ein Detail der Generatorachse 110a dargestellt. Die Antriebswelle 118 ist an dem von dem Radmontageelement 116 abgewandten Längsende mit einer Getriebeeinheit 119 verbunden. Die Getriebeeinheit 119 weist vorliegend ein Planetengetriebe 122 und ein dem Planetengetriebe 122 nachgeschaltetes Stirnradgetriebe 123 auf, die über eine Zwischenwelle 124 miteinander verbunden sind. Die Getriebeeinheit 119 überträgt die Drehbewegung wiederum an ein um eine Generatordrehachse drehbar gelagertes Generatorkoppelelement 120. Das Generatorkoppelelement 120 überträgt die Drehbewegung schließlich auf eine Antriebswelle 121 des Generators 115, wodurch der Generator 115 angetrieben wird.

Es versteht sich, dass die Erfindung nicht auf die in den Fig. 1a-c dargestellte Ausführungsform beschränkt ist.

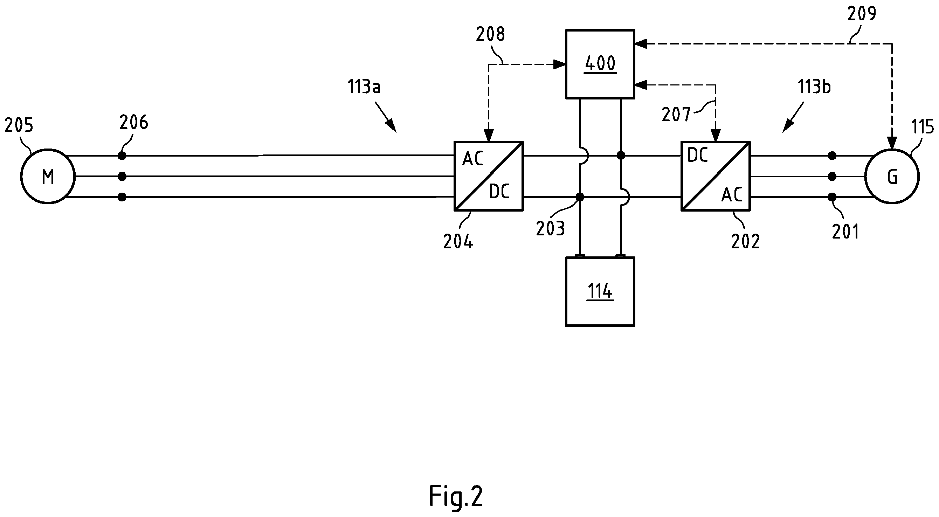

In Fig. 2 ist ein Blockschaltbild einer beispielhaften Ausführungsform eines erfindungsgemäßen Nutzfahrzeugs dargestellt. Bei dem Nutzfahrzeug kann es sich beispielsweise um den in Fig. 1a dargestellten Sattelauflieger 101 handeln, so dass in Fig. 2 die gleichen Bezugszeichen wie in Fig. 1a-c für die gleichen Komponenten verwendet werden.

Wie oben offenbart, ist der Achsgenerator 115 eingerichtet, eine elektrische Leistung in Form einer Wechselspannung bereitzustellen. Bei der Wechselspannung kann es sich um dreiphasige Wechselspannung handeln, die am Ausgangsknoten 201 des Achsgenerators 115 bereitgestellt wird. Die Spannung (z.B. Amplitude oder Effektivwert) und die Frequenz der von dem Achsgenerator 115 am Ausgangsknoten 201 bereitgestellten Wechselspannung sind beispielsweise von der Drehzahl des Achsgenerators 115 abhängig. Diese dreiphasige Wechselspannung wird durch einen in der elektrischen Verbindung 113b angeordneten Gleichrichter 202 in eine Betriebsgleichspannung zum Laden der Batterie 114 umgewandelt werden. Die Betriebsgleichspannung liegt beispielsweise am Knoten 203 an. Zum Beispiel kann die Betriebsgleichspannung der Nennspannung (z.B. 12 V, 24 V, 48 V oder 650V) der Batterie 114 entsprechen und/oder im Nennspannungsband (z.B. 12 V-Spannungsband: 9,6 V - 14,4 V, 24 V-Spannungsband: 19,2 V - 28,8 V, 48 V-Spannungsband: 38,4 - 57,6 V oder 650V-Spannungsband: 450V-800V) der Batterie 114 liegen. Die am Knoten 203 anliegende Betriebsgleichspannung kann ferner zum Betrieb von elektrischen Komponenten des Sattelaufliegers 101 wie der Steuervorrichtung 400 verwendet werden. Wenn der Achsgenerator keine elektrische Leistung bereitstellt (z.B. weil er deaktiviert ist und/oder der Sattelauflieger stillsteht), wird die am Knoten 203 anliegende Betriebsgleichspannung durch die Batterie 114 bereitgestellt. Es versteht sich, dass die Erfindung nicht hierauf beschränkt ist. Statt des Gleichrichters 202 könnte beispielsweise auch ein bidirektionaler Wechselrichter verwendet werden, der in dieser Richtung als Gleichrichter arbeitet.

Durch einen in der elektrischen Verbindung 113a angeordneten Wechselrichter 204 kann die am Knoten 203 anliegende Betriebsgleichspannung ferner in eine Betriebswechselspannung zum Betrieb des elektrischen Motors 205 der Transportkältemaschine 112 umgewandelt werden. Die Betriebsgleichspannung liegt beispielsweise am Eingangsknoten 206 des Motors 205 an. Der elektrische Motor 205 ist beispielsweise ein Drehstrommotor, insbesondere ein Asynchronmotor. Die Betriebswechselspannung ist dementsprechend beispielsweise eine dreiphasige Wechselspannung mit einem Effektivwert der verketteten Spannungen von 400V und einer Frequenz von 50 Hz (auch als Drehstrom bezeichnet).

Der Gleichrichter 202 ist beispielsweise eingerichtet, um das Drehmoment des Achsgenerators 115 zu regeln, zum Beispiel in dem der Gleichrichter die Ströme in den Statoren des Achsgenerators 115 regelt (z.B. begrenzt).

Die Steuervorrichtung 400 ist beispielsweise eingerichtet den Gleichrichter 202 und/oder den Wechselrichter 204 über die Kommunikationsverbindungen 207 und/oder 208 zu steuern. Insbesondere kann die Steuervorrichtung 400 dem Gleichrichter 202 ein Soll-Drehmoment vorgegeben, auf das der Gleichrichter 202 das Drehmoment des Achsgenerators 115 regelt. Ferner kann die Steuervorrichtung über die Kommunikationsverbindung 209 eine Drehzahlinformation, die ein aktuelle Drehzahl des Achsgenerators 115 repräsentiert, empfangen.

Die Kommunikationsverbindungen 207, 208 und 209 sind beispielsweise drahtgebundene Kommunikationsverbindungen. Insbesondere können die Kommunikationsverbindungen 207, 208 und 209 Kommunikationsverbindungen über ein Ethernet-Netzwerk oder ein CAN-, K-Leitungs-, LIN- oder Flexray-Bussystem des Sattelaufliegers 101 sein. Ethernet ist zum Beispiel in den Standards der IEEE-802.3-Familie spezifiziert. CAN ist in den Standards der ISO 11898-Familie, K-Leitung ist in den Standards ISO 9141 und ISO 14230-1, LIN ist in den Standards der ISO 17987-Familie und FlexRay in den Standards der ISO 17458-Familie spezifiziert.

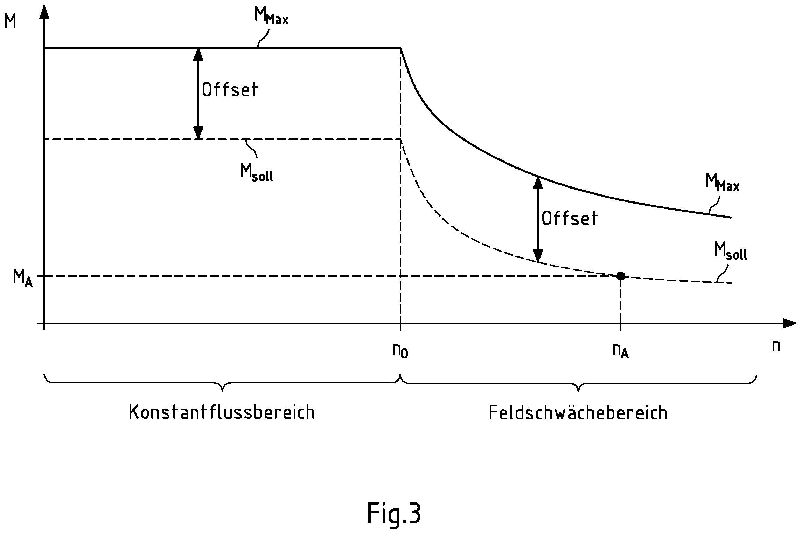

Fig. 3 ist eine Darstellung einer beispielhaften Drehzahl-Drehmoment-Kennlinie eines Achsgenerators. Im Folgenden wird beispielhaft davon ausgegangen, dass es sich bei der in Fig. 3 dargestellten Drehzahl-Drehmoment-Kennlinie um die Drehzahl-Drehmoment Kennlinie des Achsgenerators 115 handelt.

Auf der X-Achse ist die Drehzahl des Achsgenerators n aufgetragen; und auf der Y-Achse ist das Drehmoment des Achsgenerators M aufgetragen. Die Drehzahl $n0$ bezeichnet die Nenndrehzahl des Achsgenerators 115 und trennt die beiden Betriebsbereich des Achsgenerators 115, d.h. den Konstantflussbereich und den Feldschwächebereich, voneinander.

Der Achsgenerators 115 soll beispielsweise als im Konstantflussbereich betrieben verstanden werden, wenn die Drehzahl des Achsgenerators kleiner oder gleich der Nenndrehzahl $n0$ ist; und der Achsgenerator 115 soll beispielsweise als im Feldschwächebereich betrieben verstanden werden, wenn die Drehzahl des Achsgenerators größer als die Nenndrehzahl $n0$ ist.

Mit $M_{max}$ ist in Fig. 3 die Drehzahl-Drehmoment-Kennlinie des Achsgenerators 115 bezeichnet, die für jede Drehzahl n jeweils das maximale Drehmoment $M_{max}$ des Achsgenerators 115 angibt. Im Konstantflussbereich ist das maximale Drehmoment $M_{max}$ konstant. Dagegen nimmt das maximale Drehmoment $M_{max}$ im Feldschwächebereich mit steigender Drehzahl ab. Dies führt, wie oben erläutert dazu, dass, wenn der Sattelauflieger 101 beschleunigt wird, so dass die Drehzahl n steigt, das maximale Drehmoment $M_{max}$ abnimmt. Durch eine solche Abnahme verringert sich der bremsende Effekt des Achsgenerators 115, was zu einer weiteren Beschleunigung führen kann, so dass sich die Drehzahl n noch weiter erhöht. Es kann also zu einer Mitkopplung kommen, die in einem Aufschwingen der Generatorachse 110a und schlimmstenfalls in einer Beschädigung oder Zerstörung der Generatorachse 110a resultiert.

Um ein solches Aufschwingen und die daraus möglicherweise resultierenden Beschädigungen der Generatorachse 110a zu vermeiden, soll das Soll-Drehmoment gemäß der Erfindung, wenn der Achsgenerator 115 im Feldschwächebereich betrieben wird, kleiner als das für die aktuelle Drehzahl n maximale Drehmoment $M_{max}$ des Achsgenerators ist. Zu diesem Zweck kann beispielsweise die mit $M_{soll}$ bezeichnete Drehzahl-Drehmoment-Kennlinie vorgegeben werden, die für jede Drehzahl n ein jeweiliges Soll-Drehmoment $M_{soll}$, wobei das jeweilige Soll-Drehmoment $M_{soll}$ um einen vorgegebenen Offset geringer ist als das jeweilige maximale Drehmoment $M_{max}$. Wenn der Achsgenerator beispielsweise im Arbeitspunkt A mit der Drehzahl $nA$ und dem Soll-Drehmoment $M_A$ auf dieser mit $M_{soll}$ bezeichnete Drehzahl-Drehmoment-Kennlinie im Feldschwächebereich betrieben wird, kann das Drehmoment des Achsgenerators bei einer Beschleunigung oder Verzögerung des Sattelaufliegers trotz der damit einhergehenden Veränderung der Drehzahl n zunächst konstant gehalten und weiterhin auf das Soll-Drehmoment $M_A$ geregelt werden., so dass das oben beschriebene Aufschwingen verhindert wird. Zum Beispiel könnte das Soll-Drehmoment erst nach einer vorgegebenen Zeitdauer und/oder nach Abschluss der Beschleunigung oder Verzögerung an die veränderte Drehzahl angepasst werden.

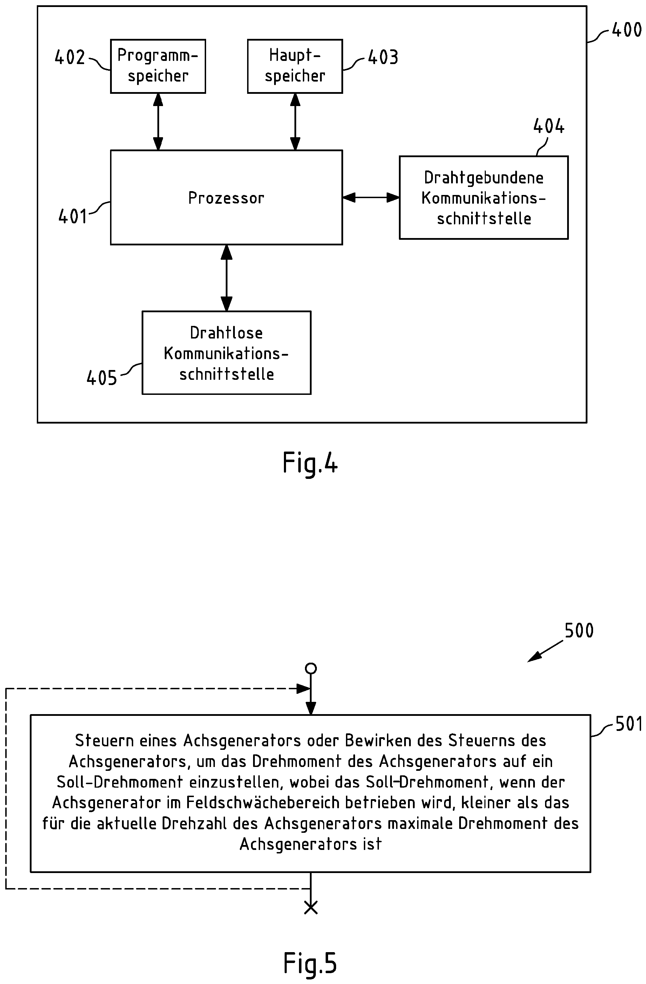

Fig. 4 zeigt eine schematische Darstellung einer beispielhaften Ausführungsform einer Steuervorrichtung 400. Im Folgenden wird beispielhaft davon ausgegangen, dass die Steuervorrichtung 400 der in Fig.2 dargestellten Steuervorrichtung 400 entspricht und eine Steuereinheit des in Fig. 1 dargestellten Sattelaufliegers ist. Die Erfindung ist nicht auf diese beispielhafte Ausführungsform beschränkt.

Die Steuereinheit 400 umfasst einen Prozessor 401 und verbunden mit dem Prozessor 401 einen ersten Speicher als Programmspeicher 402, einen zweiten Speicher als Hauptspeicher 403 und eine drahtgebundene Kommunikationsschnittstelle 404 sowie eine optionale drahtlose Kommunikationsschnittstelle 405.

Unter einem Prozessor soll beispielsweise ein Mikroprozessor (Engl. Central Processing Unit, CPU), eine Mikrokontrolleinheit, ein Mikrocontroller, ein digitaler Signalprozessor (DSP), eine Anwendungsspezifische Integrierte Schaltung (ASIC), ein Field Programmable Gate Array (FPGA), oder ein graphischer Prozessor (Engl: Graphics Processing Unit, GPU) verstanden werden.

Der Prozessor 401 führt Anweisungen aus, die in Programmspeicher 402 gespeichert sind, und speichert beispielsweise Zwischenergebnisse oder Ähnliches in Hauptspeicher 403. Es versteht sich, dass die Steuereinheit 400 auch mehrere Prozessoren 401 umfassen kann.

In dem Programmspeicher 402 ist beispielsweise das Betriebssystem der Steuereinheit 400 gespeichert, das beim Starten der Steuereinheit 400 zumindest teilweise in Hauptspeicher 403 geladen und vom Prozessor 401 ausgeführt wird. Insbesondere kann beim Starten der Steuereinheit 400 zumindest ein Teil des Kerns des Betriebssystems in den Hauptspeicher 403 geladen und vom Prozessor 401 ausgeführt.

Ein Beispiel für ein Betriebssystem ist ein Windows-, UNIX-, Linux-, Android-, Apple iOS- und/oder MAC OS-Betriebssystem. Das Betriebssystem ermöglicht insbesondere die Verwendung der Steuereinheit 400 zur Datenverarbeitung. Es verwaltet beispielsweise Betriebsmittel wie einen Hauptspeicher und einen Programmspeicher, stellt unter anderem durch Programmierschnittstellen anderen Computerprogrammen grundlegende Funktionen zur Verfügung und steuert die Ausführung von Computerprogrammen.

Ein Programmspeicher ist beispielsweise ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Ein Hauptspeicher ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Neben dem Betriebssystem der Steuereinheit 400 kann der Programmspeicher 402 auch weitere Anweisungen enthalten. Beispiele für solche Anweisungen sind beispielsweise Anweisungen eines Computerprogramms, die den Prozessor 401, wenn er die Anweisungen ausführt, veranlassen, das Verfahren gemäß der Erfindung (z.B. das Verfahren gemäß dem in Fig. 5 dargestellten Flussdiagramm 500) zumindest teilweise auszuführen. Außerdem kann der Programmspeicher 402 eine Repräsentation der in Fig. 3 dargestellten Drehzahl-Drehmoment-Kennlinien $M_{max}$ und $M_{soll}$ enthalten.

Der Hauptspeicher 403 und der Programmspeicher 402 können auch als ein Speicher ausgebildet sein. Alternativ können der Hauptspeicher 403 und/oder der Programmspeicher 402 jeweils durch mehrere Speicher gebildet werden. Ferner können der Hauptspeicher 403 und/oder der Programmspeicher 402 auch Teil des Prozessors 401 sein.

Der Prozessor 401 steuert die drahtgebundene Kommunikationsschnittstelle 404, welche beispielsweise eingerichtet ist, Informationen mit anderen Komponenten des Sattelaufliegers 101 auszutauschen (z.B. zu senden und/oder zu empfangen). Die Kommunikationsschnittstelle 404 ist beispielsweise als Ethernet-, CAN-, K-Leitungs-, LIN- oder Flexray-Schnittstelle ausgebildet. Sie ist beispielsweise eingerichtet zur drahtgebundenen Kommunikation mit dem Achsgenerator 115, dem Gleichrichter 202 und dem Wechselrichter 204 über die Kommunikationsverbindungen 207, 208 und 209. Zum Beispiel kann die Steuereinheit 400 durch die drahtgebundene Kommunikationsschnittstelle 404 Informationen an den Achsgenerator 115, den Gleichrichter 202 und den Wechselrichter 204 senden und/oder von diesen empfangen.

Ferner weist die Steuereinheit 400 eine durch den Prozessor 401 gesteuerte optionale drahtlose Kommunikationsschnittstelle 405 auf, über welche Informationen über einen drahtlosen Kommunikationspfad mit einer entfernten Vorrichtung wie einem Server ausgetauscht (z.B. gesendet und/oder empfangen) werden können. Die drahtlose Kommunikationsschnittstelle 405 ist beispielsweise als WLAN- und/oder Mobilfunk-Schnittstelle ausgebildet. WLAN ist, wie oben offenbart, in den Standards der IEEE 802.11-Familie standardisiert. Unter Mobilfunk sollen insbesondere Mobilfunkkommunikationssysteme wie ein 2G/3G/4G/5G/6G-Kommunikationssystem verstanden werden. Die Spezifikationen der 2G, 3G, 4G, 5G oder 6G Mobilfunkkommunikationssysteme werden derzeit durch das 3rd Generation Partnership Project (3GPP) entwickelt und können derzeit im Internet unter https://www.3gpp.org/ abgerufen werden.

Die Komponenten 401 bis 405 der Steuereinheit 400 sind beispielsweise über einen oder mehrere Bussysteme (z.B. ein oder mehrere serielle und/oder parallele Busverbindungen) kommunikativ und/oder operativ miteinander verbunden.

Es versteht sich, dass die Steuereinheit 400 neben den dargestellten Komponenten weitere Komponenten (z.B. eine Benutzerschnittstelle) umfassen kann.

Fig. 5 zeigt ein Flussdiagramm 500 einer beispielhaften Ausführungsform eines Verfahrens gemäß der Erfindung. Im Folgenden wird beispielhaft davon ausgegangen, dass das Verfahren durch die in Fig. 4 dargestellte Steuereinheit 400, die Teil des in Fig. 1 dargestellten Sattelaufliegers 101 ist, ausgeführt wird.

In einem Schritt 501 wird der Achsgenerator 115 gesteuert, um das Drehmoment des Achsgenerators auf ein Soll-Drehmoment einzustellen; oder es wird das Steuern des Achsgenerators 115 bewirkt, um das Drehmoment des Achsgenerators auf ein Soll-Drehmoment einzustellen. Dabei soll das Soll-Drehmoment, wenn der Achsgenerator im Feldschwächebereich betrieben wird, kleiner als das für die aktuelle Drehzahl des Achsgenerators maximale Drehmoment des Achsgenerators ist.

Unter dem Bewirken des Steuerns des Achsgenerators in Schritt 501, um das Drehmoment des Achsgenerators 115 auf ein Soll-Drehmoment einzustellen, soll beispielsweise verstanden werden, dass das Steuern des Achsgenerators 115 veranlasst wird, zum Beispiel in dem das Soll-Drehmoment für das Steuerns des Achsgenerator 115 bestimmt wird; und unter dem Steuern des Achsgenerators 115 in Schritt 501, um das Drehmoment des Achsgenerators 115 auf ein Soll-Drehmoment einzustellen, soll beispielsweise verstanden werden, dass das Drehmoment des Achsgenerators 115 auf das Soll-Drehmoment geregelt wird und/oder dass eine Drehmomentregelung des Achsgenerators 115 angesteuert wird, um das Drehmoment des Achsgenerators 115 auf das Soll-Drehmoment zu regeln.

Eine solche Drehmomentregelung kann, wie oben offenbart, durch einen Spannungsrichter wie den Gleichrichter 202 realisiert werden. Der Gleichrichter 202 ist beispielsweise eingerichtet, um das Drehmoment des Achsgenerators 115 zu regeln, zum Beispiel in dem der Gleichrichter die Ströme in den Statoren des Achsgenerators 115 regelt (z.B. begrenzt). Dementsprechend kann die Steuereinheit 400 den Achsgenerator in Schritt 501 steuern, indem sie den Gleichrichter 202 über die Kommunikationsverbindung 207 derart ansteuert, dass der Gleichrichter 202 das Drehmoment des Achsgenerators 115 auf das Soll-Drehmoment regelt.

Das Steuern oder Bewirken des Steuerns in Schritt 501 kann (i) das Erhalten einer eine Drehzahl des Achsgenerators 115 repräsentierenden Drehzahlinformation und (ii) das Bestimmen des Soll-Drehmoments zumindest teilweise basierend auf der Drehzahlinformation umfassen.

Zum Beispiel kann die Steuereinheit 400 über die Kommunikationsverbindung 209 eine Drehzahlinformation, die eine aktuelle Drehzahl des Achsgenerators 115 repräsentiert, empfangen. Basierend auf dieser durch die Drehzahlinformation repräsentierten aktuellen Drehzahl kann die Steuereinheit 400 anschließend das Soll-Drehmoment bestimmen. Zum Beispiel kann die Steuereinheit 400 das Soll-Drehmoment anhand der Repräsentation der Drehzahl-Drehmoment-Kennlinie $M_{Soll}$, bestimmen, wenn diese im Programmspeicher der Steuereinheit 400 gespeichert ist, bestimmen. Wie oben offenbart, gibt diese Kennlinie für jede Drehzahl des Achsgenerators 115 ein jeweiliges Soll-Drehmoment vor.

Wie oben offenbart, kann der Schritt 501 wiederholt werden, wenn sich die aktuelle Drehzahl des Achsgenerators 115 -z.B. aufgrund einer Beschleunigung oder Verzögerung des Sattelaufliegers 101 - verändert. Zum Beispiel könnte vorgesehen sein, dass der Schritt 501 (i) nach einer vorgegebenen Zeitdauer nach einer solchen Veränderung (z.B. nach einer vorgegebenen Zeitdauer nach Beginn der Beschleunigung oder Verzögerung) und/oder (ii) nach Abschluss der Beschleunigung oder Verzögerung wiederholt werden, um das Soll-Drehmoment an die veränderte Drehzahl anzupassen.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Schritte in den einzelnen Flussdiagrammen ist nicht zwingend, alternative Abfolgen der Schritte sind denkbar - soweit nicht anders angegeben. Die Schritte können auf verschiedene Art und Weise implementiert werden, so ist eine Implementierung in Software (durch Programmanweisungen), Hardware oder eine Kombination von beidem zur Implementierung der Schritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Komponente kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

**Patentansprüche**

1. Verfahren zum Steuern eines Achsgenerators (115) eines Nutzfahrzeugs (101), wobei das Verfahren durch eine oder mehrere Vorrichtungen (400) ausgeführt wird, wobei das Verfahren umfasst:

   - Steuern (501) des Achsgenerators (115) oder Bewirken (501) des Steuerns des Achsgenerators (115), um das Drehmoment (M) des Achsgenerators (115) auf ein Soll-Drehmoment ($M_{Soll}$) einzustellen, wobei das Soll-Drehmoment ($M_{Soll}$), wenn der Achsgenerator (115) im Feldschwächebereich betrieben wird, kleiner als das für die aktuelle Drehzahl (n) des Achsgenerators (115) maximale Drehmoment ($M_{max}$) des Achsgenerators (115) ist.

2. Verfahren nach Anspruch 1, wobei der Achsgenerator (115) eine durch ein Rad (111) des Nutzfahrzeugs (101) antreibbare Asynchronmaschine, insbesondere eine Drehstrom-Asynchronmaschine, ist.

3. Verfahren nach einem der Ansprüche 1 und 2, wobei das Steuern (501) des Achsgenerators (115) oder das Bewirken (501) des Steuerns des Achsgenerators (115) umfasst:

   - Bestimmen, dass der Achsgenerator im Feldschwächebereich betrieben wird.

4. Verfahren nach Anspruch 3, wobei das Bestimmen, dass der Achsgenerator (115) im Feldschwächebereich betrieben wird, zumindest teilweise auf einer Fahrtgeschwindigkeit des Nutzfahrzeugs (101) und/oder der aktuellen Drehzahl (n) des Achsgenerator (115) basiert.

5. Verfahren nach einem der Ansprüche 1 bis 4, wobei das Steuern (501) des Achsgenerators (115) oder das Bewirken (501) des Steuerns des Achsgenerators (115) umfasst:

   - Erhalten einer eine Drehzahl (n) des Achsgenerators (115) repräsentierenden Drehzahlinformation;
   - Bestimmen des Soll-Drehmoments ($M_{Soll}$) zumindest teilweise basierend auf der Drehzahlinformation.

6. Verfahren nach Anspruch 5, wobei die Drehzahlinformation eine aktuelle Drehzahl (n) des Achsgenerators (115) repräsentiert.

7. Verfahren nach Anspruch 5, wobei die Drehzahlinformation eine Drehzahl (n) des Achsgenerators (115) mit einer zeitlichen Verzögerung repräsentiert.

8. Verfahren nach einem der Ansprüche 5 bis 7, wobei das Bestimmen des Soll-Drehmoments ($M_{Soll}$) ferner zumindest teilweise auf einer Drehzahl-Drehmoment-Kennlinie ($M_{Soll}$, $M_{max}$) basiert, wobei die Drehzahl-Drehmoment-Kennlinie ($M_{Soll}$, $M_{max}$) für jede Drehzahl (n) des Achsgenerators (115) in einem Drehzahlbereich ein jeweiliges Soll-Drehmoment ($M_{Soll}$) und/oder ein jeweils maximales Drehmoment ($M_{max}$) vorgibt.

9. Verfahren nach Anspruch 8, wobei die Drehzahl-Drehmoment-Kennlinie ($M_{Soll}$, $M_{max}$) vordefiniert ist oder im Betrieb des Achsgenerators (115) bestimmt und/oder angepasst wird.

10. Verfahren nach einem der Ansprüche 1 bis 9, wobei die vom Achsgenerator (115) erzeugte Wechselspannung durch einen Spannungsrichter (202) in eine Gleichspannung umgewandelt wird, und wobei der Spannungsrichter (202) eingerichtet ist, den Achsgenerator (115) zu regeln, um das Drehmoment des Achsgenerators auf das Soll-Drehmoment ($M_{Soll}$) einzustellen.

11. Vorrichtung (400) umfassend Mittel (401-405) eingerichtet zum Ausführen des Verfahrens nach einem der Ansprüche 1 bis 10, wobei die Mittel der Vorrichtung eingerichtet sind, das Verfahren nach einem der Ansprüche 1 bis 10 alleine und/oder in Kooperation mit einer oder mehreren weiteren Vorrichtungen auszuführen.

12. Nutzfahrzeug (101) umfassend

    - zumindest eine Vorrichtung (400) nach Anspruch 11; und
    - eine als Generatorachse (110a) ausgebildete Nutzfahrzeugachse umfassend einen Achsgenerator (115).

13. Nutzfahrzeug (101) nach Anspruch 12, wobei das Nutzfahrzeug ein Nutzfahrzeuganhänger, insbesondere ein Sattelauflieger, ist.

14. Computerprogramm, umfassend Programmanweisungen, die dazu ausgebildet sind, bei Ausführung durch mindestens einen Prozessor (401), eine Vorrichtung (400) zu veranlassen, das Verfahren nach einem der Ansprüche 1 bis 10 alleine und/oder in Kooperation mit einer oder mehreren weiteren Vorrichtungen auszuführen.

Fig.1a

Fig.1b

Fig.1c

Fig.2

EP 4 738 690 A1

Fig.3

EP 4 738 690 A1

400

402 — Programm-speicher

Haupt-speicher — 403

404

401 — Prozessor

Drahtgebundene Kommunikations-schnittstelle

405 — Drahtlose Kommunikations-schnittstelle

## Fig.4

500

501

Steuern eines Achsgenerators oder Bewirken des Steuerns des Achsgenerators, um das Drehmoment des Achsgenerators auf ein Soll-Drehmoment einzustellen, wobei das Soll-Drehmoment, wenn der Achsgenerator im Feldschwächebereich betrieben wird, kleiner als das für die aktuelle Drehzahl des Achsgenerators maximale Drehmoment des Achsgenerators ist

## Fig.5

Europäisches
Patentamt

European
Patent Office

Office européen
des brevets

## EUROPÄISCHER RECHERCHENBERICHT

Nummer der Anmeldung

EP 24 20 9566

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2019/165649 A1 (VAN WIJK RUDOLF JOHANNES [NL]) 30. Mai 2019 (2019-05-30) * Absatz [0002] * * Absatz [0011]; Abbildungen 1,2 * * Absatz [0006] * ----- | 1-14 | INV. H02P9/14 B60K16/00 B60L15/20 H02K7/00 H02P9/48 |
| Y | DE 11 2011 100096 T5 (AISIN AW CO [JP]) 20. September 2012 (2012-09-20) * Absatz [0051] - Absatz [0052]; Abbildung 3 * ----- | 1-14 | H02P23/00 |
| A | Binder Andreas: "Elektromotorische Antriebe für Hybrid- und Elektrofahrzeuge", , 9. Juni 2010 (2010-06-09), XP093266464, Gefunden im Internet: URL:https://www.ew.tu-darmstadt.de/media/ew/rd/ew_vortraege/100609_binder_knopik_hybrid_elektrofahrzeuge.pdf * Seite 23 * ----- | 1-14 | |

**RECHERCHIERTE SACHGEBIETE (IPC)**

H02P
H02K
B60L
B60K

Der vorliegende Recherchenbericht wurde für alle Patentansprüche erstellt

| Recherchenort | Abschlußdatum der Recherche | Prüfer |
|---|---|---|
| München | 11. April 2025 | Schürle, Patrick |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 20 9566

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-04-2025

| Im Recherchenbericht angeführtes Patentdokument | Datum der Veröffentlichung | Mitglied(er) der Patentfamilie | | Datum der Veröffentlichung |
|---|---|---|---|---|
| US 2019165649 A1 | 30-05-2019 | CN | 109314434 A | 05-02-2019 |
| | | EP | 3469690 A1 | 17-04-2019 |
| | | NL | 2016936 A | 20-12-2017 |
| | | RU | 2019100041 A | 10-07-2020 |
| | | US | 2019165649 A1 | 30-05-2019 |
| | | WO | 2017214363 A1 | 14-12-2017 |
| DE 112011100096 T5 | 20-09-2012 | CN | 102763322 A | 31-10-2012 |
| | | DE | 112011100096 T5 | 20-09-2012 |
| | | JP | 5120669 B2 | 16-01-2013 |
| | | JP | 2011217468 A | 27-10-2011 |
| | | US | 2011241584 A1 | 06-10-2011 |
| | | WO | 2011122104 A1 | 06-10-2011 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 4206018 A1